(19) Europäisches Patentamt
European Patent Office
Office européen des brevets

(11) **EP 4 657 125 A2**

(12) **EUROPEAN PATENT APPLICATION**

(43) Date of publication:
**03.12.2025 Bulletin 2025/49**

(21) Application number: **25208582.4**

(22) Date of filing: **18.01.2023**

(51) International Patent Classification (IPC):
***G02B 5/18*** *(2006.01)*

(52) Cooperative Patent Classification (CPC):
**G02B 5/1823; G02B 5/1852; G02B 5/1876;**
G02B 5/1866

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.01.2022 JP 2022006968**

(62) Document number(s) of the earlier application(s) in
accordance with Art. 76 EPC:
**23743267.9 / 4 468 043**

(71) Applicant: **Dai Nippon Printing Co., Ltd.**
**Tokyo 162-8001 (JP)**

(72) Inventor: **NAITO, Yukie**
**Tokyo-to, 162-8001 (JP)**

(74) Representative: **Müller-Boré & Partner**
**Patentanwälte PartG mbB**
**Friedenheimer Brücke 21**
**80639 München (DE)**

Remarks:
This application was filed on 14.10.2025 as a
divisional application to the application mentioned
under INID code 62.

(54) **DIFFRACTION GRATING AND MOLD FOR FORMING DIFFRACTION GRATING**

(57) A mold for forming a diffraction grating is provided. The mold comprises: an optically transparent substrate; and a pattern structure, with a step-like cross-sectional shape, on a surface of the optically transparent substrate, wherein the pattern structure is formed of a single member, the pattern structure includes a first pattern portion and a second pattern portion with different pattern periods and different numbers of steps, a pattern period of the second pattern portion is shorter than a pattern period of the first pattern portion, a number of steps of the second pattern portion is more than a number of steps of the first pattern portion, and a difference between a pattern height of the first pattern portion and a pattern height of the second pattern portion is less than a minimum height of one step of the first pattern portion; wherein the difference between the pattern height of the first pattern portion and the pattern height of the second pattern portion is 15% or less with respect to 100% of the pattern height of the first pattern portion, and/or wherein the number of steps of the first pattern portion is 7 or more.

## FIG. 1

EP 4 657 125 A2

## Description

Technical Field

The present disclosure relates to a diffraction grating and a mold for forming a diffraction grating.

Background Art

As a diffraction grating, a diffraction grating with a step-like cross-sectional shape has been known.

Conventionally, a diffraction grating with a step-like cross-sectional shape of the Nth power of 2 steps is formed by repeating lithography and etching for N times. Also, when plural types of diffraction grating portions with different grating periods are formed, the diffraction grating portion with short grating period is formed in smaller number of steps than the diffraction grating portion with long grating period, in view of manufacturing limitations. This method is described, for example, in Non-Patent Document 1.

However, among the plural types of diffraction grating portions with different grating periods, the diffraction efficiency of the diffraction grating portion with short grating period decreases since the number of steps is decreased.

Also, depending on, for example, the characteristics of the etching device and the etching conditions, excessive etching or insufficient etching may occur, and the grating height may deviate from the designed value.

For example, when plural types of diffraction grating portions with different grating periods are formed, the grating height of the diffraction grating portion with short grating period may be lower than that of the diffraction grating portion with long grating period, depending on, for example, the characteristics of the etching device and the etching conditions. Similarly, in such a case, the grating height may be uneven, and the diffraction efficiency decreases.

As a method for replicating design values in high definition, Patent Document 1 and Patent Document 2 disclose a method wherein an etching stopper layer is placed for each step. However, in this method, since it is necessary to form an etching stopper layer in advance for each step, the production process gets more complicated and requires a longer time.

Citation List

Patent Documents

Patent Document 1: Japanese Patent Application Laid-Open (JP-A) No. H08-15510
Patent Document 2: JP-A No. 2000-181076

Non-patent Document

Non-Patent Document 1: Zhiyu Zhang and et al., "Hybrid-level Fresnel zone plate for diffraction efficiency enhancement" Optics Express Vol. 25, Issue 26, pp. 33676-33687 (2017)

Summary of Disclosure

Technical Problem

The present disclosure has been made in view of the above circumstances, and a main object of the present disclosure is to provide a diffraction grating capable of improving the evenness of the grating height without using an etching stopper layer.

Solution to Problem

One embodiment of the present disclosure provides a diffraction grating comprising: an optically transparent substrate; and a diffraction grating structure, with a step-like cross-sectional shape, on a surface of the optically transparent substrate, wherein the diffraction grating structure is formed of a single member, the diffraction grating structure includes a first diffraction grating portion and a second diffraction grating portion with different grating periods and different numbers of steps, a grating period of the second diffraction grating portion is shorter than a grating period of the first diffraction grating portion, a number of steps of the second diffraction grating portion is more than a number of steps of the first diffraction grating portion, and a difference between a grating height of the first diffraction grating portion and a grating height of the second diffraction grating portion is less than a minimum height of one step of the first diffraction grating portion.

In the present disclosure, the difference between the grating height of the first diffraction grating portion and the grating height of the second diffraction grating portion is preferably 15% or less with respect to 100% of the grating height of the first diffraction grating portion.

In the present disclosure, the number of steps of the first diffraction grating portion is preferably 7 or more.

One embodiment of the present disclosure provides a mold for forming a diffraction grating comprising a pattern structure configured to duplicate the diffraction grating described above.

One embodiment of the present disclosure provides a mold for forming a diffraction grating comprising: an optically transparent substrate; and a pattern structure, with a step-like cross-sectional shape, on a surface of the optically transparent substrate, wherein the pattern structure is formed of a single member, the pattern structure includes a first pattern portion and a second pattern portion with different pattern periods and different numbers of steps, a pattern period of the second pattern portion is shorter than a pattern period of the first pattern portion, a number of steps of the second pattern portion is more than a number of steps of the first pattern portion, and a difference between a pattern height of the first pattern portion and a pattern height of the second pattern portion is less than a minimum height of one step of the first pattern portion.

In the present disclosure, the difference between the pattern height of the first pattern portion and the pattern height of the second pattern portion is preferably 15% or less with respect to 100% of the pattern height of the first pattern portion.

In the present disclosure, the number of steps of the first pattern portion is preferably 7 or more.

One embodiment of the present disclosure provides a diffraction grating comprising a diffraction grating structure duplicated by the mold for forming a diffraction grating described above.

Advantageous Effects of Disclosure

The diffraction grating in the present disclosure exhibits an effect of improving the evenness of the grating height, and improving diffraction efficiency.

Brief Description of Drawings

FIG. 1 is a schematic cross-sectional view illustrating an example of a diffraction grating in the present disclosure.
FIGS. 2A to 2J are process drawings illustrating an example of a conventional method for producing a diffraction grating.
FIGS. 3A and 3B are process drawings illustrating an example of a conventional method for producing a diffraction grating.
FIGS. 4A and 4B are schematic cross-sectional views illustrating an example of a conventional diffraction grating.
FIGS. 5A and 5B are schematic cross-sectional views illustrating an example of a diffraction grating in the present disclosure.
FIGS. 6A and 6B are schematic cross-sectional views illustrating an example of a diffraction grating in the present disclosure.
FIGS. 7A and 7B are schematic cross-sectional views illustrating an example of a diffraction grating in the present disclosure.
FIGS. 8A and 8B are schematic cross-sectional views illustrating an example of a diffraction grating in the present disclosure.
FIGS. 9A to 9J are process drawings illustrating an example of a method for producing a diffraction grating in the present disclosure.
FIGS. 10A to 10F are process drawings illustrating an example of a method for producing a diffraction grating in the present disclosure.
FIGS. 11A to 11C are schematic cross-sectional views illustrating a simulation model of Reference Example 1.
FIG. 12 is a graph illustrating simulation results of Reference Example 1.
FIG. 13 is a graph illustrating simulation results of Reference Example 2.

Description of Embodiments

Embodiments in the present disclosure are hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure. Also, in the present descriptions and each drawing, for the factor same as that described in the figure already explained, the same reference sign is indicated and the detailed explanation thereof may be omitted.

In the present descriptions, in expressing an aspect wherein some member is placed on the other member, when described as merely "on" or "below", unless otherwise stated, it includes both of the following cases: a case wherein some member is placed directly on or directly below the other member so as to be in contact with the other member, and a case wherein some member is placed on the upper side or the lower side of the other member via yet another member. Also, in the present descriptions, on the occasion of expressing an aspect wherein some member is placed on the surface of the other member, when described as merely "on the surface", unless otherwise stated, it includes both of the following cases: a case wherein some member is placed directly on or directly below the other member so as to be in contact with the other member, and a case wherein some member is placed on the upper side or the lower side of the other member via yet another member.

The diffraction grating in the present disclosure is hereinafter described.

The diffraction grating in the present disclosure comprises: a diffraction grating structure, with a step-like cross-sectional shape, on a surface of an optically transparent substrate, wherein the diffraction grating structure is formed of a single member; the diffraction grating structure includes a first diffraction grating portion and a second diffraction grating portion with different grating periods and different numbers of steps; a grating period of the second diffraction grating portion is shorter than a grating period of the first diffraction grating portion; a number of steps of the second diffraction grating portion is more than a number of steps of the first diffraction grating portion; and a difference between a grating height of the first diffraction grating portion and a grating height of the second diffraction grating portion is less than a minimum height of one step of the first diffraction grating portion.

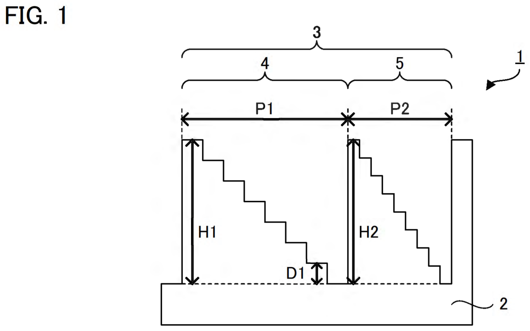

FIG. 1 is a schematic cross-sectional view illustrating an example of a diffraction grating in the present disclosure. A diffraction grating 1 in FIG. 1 comprises a diffraction grating structure 3, with a step-like cross-sectional shape, on the surface of an optically transparent substrate 2. The step-like shape is a shape with a number of steps of two steps or more. The diffraction grating structure 3 is formed of a single member, and includes a first diffraction grating portion 4 and a second diffraction grating portion 5 with different grating periods and numbers of steps.

The grating period P2 of the second diffraction grating portion 5 is shorter than the grating period P1 of the first diffraction grating portion 4. Also, the number of steps of the second diffraction grating portion 5 is more than the number of steps of the first diffraction grating portion 4. For example, in FIG. 1, the number of steps of the first diffraction grating portion 4 is eight steps, and the number of steps of the second diffraction grating portion 5 is nine steps. Also, the difference between the grating height H1 of the first diffraction grating portion 4 and the grating height H2 of the second diffraction grating portion 5 is less than the minimum height D1 of one step of the first diffraction grating portion 4.

The minimum height D1 of one step of the first diffraction grating portion 4 is the minimum height among the heights of the steps of the first diffraction grating portion 4. FIG. 1 shows the case where the height of one step of the first diffraction grating portion 4 is the same for all steps. In this case, the height of every one step of the first diffraction grating portion 4 is the minimum height D1. That is, the minimum height D1 of one step of the first diffraction grating portion 4 may be the height of one step of the first diffraction grating portion 4. In FIG. 1, for example, the height of one step of the lowest step of the first diffraction grating portion 4 is regarded as the minimum height D1.

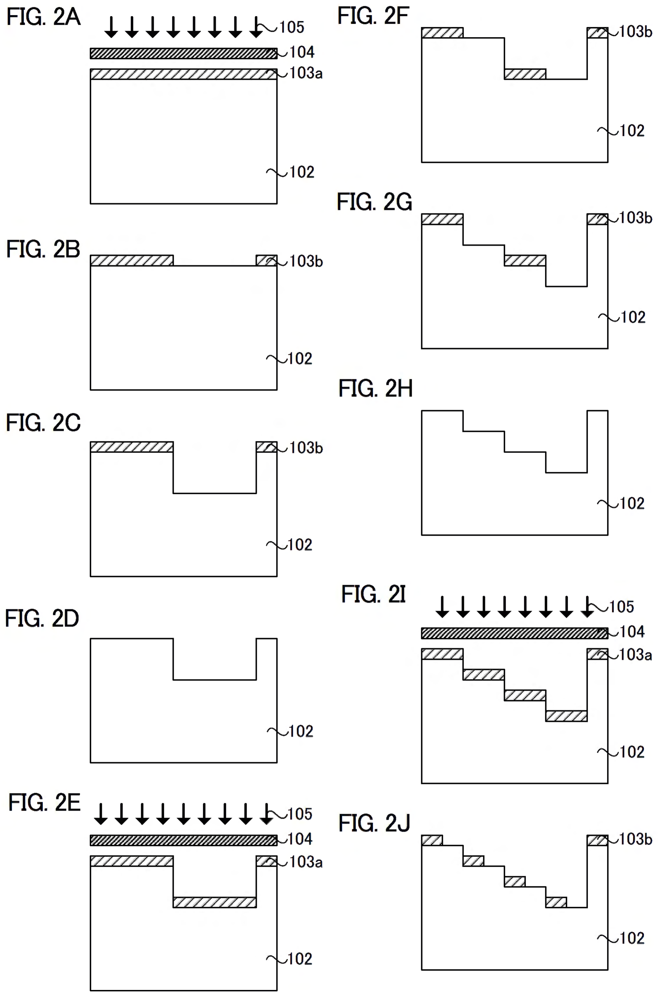

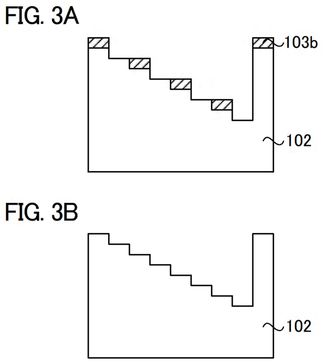

As a conventional method for producing a diffraction grating, a method wherein a diffraction grating structure with a step-like shape of the Nth power of 2 steps is formed by repeating lithography and etching for N times, is explained. FIGS. 2A to 2J and FIGS. 3A and 3B are process drawings illustrating an example of a conventional method for producing a diffraction grating. As shown in FIG. 2A, a resist layer 103a is formed on a substrate 102, and a pattern exposure is carried out by irradiating energy rays 105 such as ultraviolet rays via a mask 104. As shown in FIG. 2B, a resist pattern 103b is formed. As shown in FIG. 2C, the substrate 102 is etched. As shown in FIG. 2D, the resist pattern 103b is removed. Thereby, a step-like shape with 2 steps is formed. As shown in FIGS. 2E to 2H, the formation of the resist layer 103a, the pattern exposure, the etching of the substrate 102, and the removal of the resist pattern 103b are further carried out to form a step-like shape with 4 steps. As shown in FIGS. 2I to 2J and FIGS. 3A and 3B, the formation of the resist layer 103a, the pattern exposure, the etching of the substrate 102, and the removal of the resist pattern 103b are further carried out to form a step-like shape with 8 steps. As described above, by repeating lithography and etching for 3 times, a diffraction grating structure with a step-like shape with the 3rd power of 2, that is, 8 steps, may be formed.

In the conventional method for producing a diffraction grating, when plural types of diffraction grating portions with different grating periods are formed, the diffraction grating portion with short grating period is formed in smaller number of steps than the diffraction grating portion with long grating period, in view of manufacturing limitations.

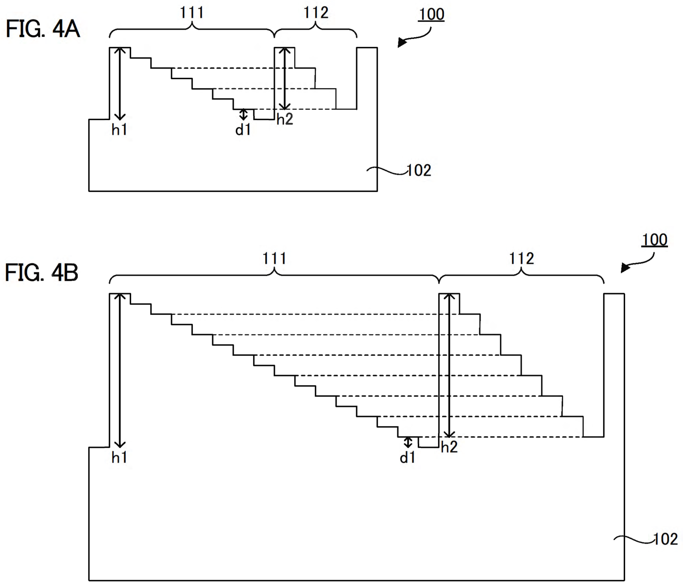

In the case of the conventional method for producing a diffraction grating, when the diffraction grating portion with short grating period is formed in smaller number of steps, and when the number of steps of the diffraction grating portion with long grating period is the Nth power of 2, the number of steps of the diffraction grating portion with short grating period is, for example, the (N-1)th power of 2. For example, as shown in FIG. 4A, when the number of steps of the diffraction grating portion 111 with long grating period is the 3rd power of 2, that is, 8 steps, the number of steps of the diffraction grating portion 112 with short grating period is the 2nd power of 2, that is, 4 steps. Also, for example, as shown in FIG. 4B, when the number of steps of the diffraction grating portion 111 with long grating period is 16 steps (the 4th power of 2), the number of steps of the diffraction grating portion 112 with short grating period is the 3rd power of 2, that is, 8 steps. In this case, the grating height h2 of the diffraction grating portion 112 with a short grating period is lower than the grating height h1 of the diffraction grating portion 111 with long grating period by the height d1 of one step of the diffraction grating portion 111 with long grating period. Therefore, in the diffraction grating portion 112 with short grating period, since the number of steps is reduced, the diffraction efficiency is reduced.

Also, in the method for producing a diffraction grating, depending on, for example, the characteristics of the etching device and the etching conditions, excessive etching or insufficient etching may occur, and the grating height may deviate from the designed value. For example, in the method for producing a diffraction grating, when plural types of diffraction grating portions with different grating periods are formed, the grating height of the diffraction grating portion with short grating period may be lower than that of the diffraction grating portion with long grating period, depending on, for example, the characteristics of the etching device and the etching conditions. In such a case, the grating height may be uneven, and the diffraction efficiency decreases.

In the present disclosure, although the grating period of the second diffraction grating portion is shorter than the grating period of the first diffraction grating portion, the number of steps of the second diffraction grating portion is more than the number of steps of the first diffraction grating portion.

Also, by increasing the number of steps of the second diffraction grating portion with short grating period, the difference between the grating height of the first diffraction grating portion and the grating height of the second diffraction grating portion may be made less than the minimum height of one step of the first diffraction grating portion, and the grating height may be made even. Therefore, the diffraction efficiency may be improved.

Each constitution of the diffraction grating in the present disclosure is hereinafter described.

1. Diffraction grating structure

The diffraction grating in the present disclosure comprises a diffraction grating structure, with a step-like cross-sectional shape, on a surface of an optically transparent substrate.

The diffraction grating structure includes a first diffraction grating portion and a second diffraction grating portion with different grating periods and numbers of steps; the grating period of the second diffraction grating portion is shorter than the grating period of the first diffraction grating portion; the number of steps of the second diffraction grating portion is more than the number of steps of the first diffraction grating portion; and a difference between a grating height of the first diffraction grating portion and a grating height of the second diffraction grating portion is less than a minimum height of one step of the first diffraction grating portion.

The difference between the grating height of the first diffraction grating portion and the grating height of the second diffraction grating portion is less than the minimum height of one step of the first diffraction grating portion. Thereby, the uniformity of the grating height of the diffraction grating structure may be improved so that the diffraction efficiency may be improved. Incidentally, the height of one step of the first diffraction grating portion is described later.

The difference between the grating height of the first diffraction grating portion and the grating height of the second diffraction grating portion is preferably, for example, 15% or less, more preferably 9% or less, and further preferably 6% or less, with respect to 100% of the grating height of the first diffraction grating portion. When the difference described above is 15% or less, the uniformity of the grating height of the diffraction grating structure may be improved so that the diffraction efficiency may be improved. When the difference described above is 9% or less, or 6% or less, the diffraction efficiency may further be improved.

The grating height of the first diffraction grating portion is set appropriately according to the use application of the diffraction grating. In general, when the height of one step is the same for all steps, the height may be set to the grating height H1 determined from the following formulas (1) and (2).

$$H1 = D1 \times (L - 1) \qquad\qquad (1)$$

$$D1 = (2 \times \lambda)/(L \times 2 \times \Delta n) \qquad\qquad (2)$$

D1 is the height of one step. L is the number of steps. $\lambda$ is the wavelength of the incident light. $\Delta n$ is the difference between the refractive index n1 of the first diffraction grating portion and the refractive index n2 of the medium in contact with the first diffraction grating portion, and that is a value obtained by subtracting the refractive index n2 of the medium in contact with the first diffraction grating portion from the refractive index n1 of the first diffraction grating portion.

For example, when the wavelength $\lambda$ of the incident light is 940 nm, the number of steps L is 8, and the refractive index difference $\Delta n$ is 0.5, the grating height H1 is 1645 nm.

The grating height of the second diffraction grating portion may be similar to the grating height of the first diffraction grating portion described above.

As long as the difference with respect to the grating height of the first diffraction grating portion is in a predetermined range, the grating height of the second diffraction grating portion may be higher than, or lower than the grating height of the first diffraction grating portion, and may be the same as the grating height of the first diffraction grating portion.

The grating height of each diffraction grating portion is the distance from the top portion to the bottom portion of each diffraction grating portion in the thickness direction of the diffraction grating. For example, as shown in FIG. 1, the grating height H1 of the first diffraction grating portion 4 is the distance from the top portion to the bottom portion of the first diffraction grating portion 4, and the grating height H2 of the second diffraction grating portion 5 is the distance from the top portion to the bottom portion of the second diffraction grating portion 5.

The height of one step of the first diffraction grating portion is set appropriately according to the grating height, number of steps, and approximate shape of the first diffraction grating portion. For example, when the height of one step is set to be the same for all steps, the height may be set so that it is the height D1 of one step determined from the formulas (2) described above. When the height of one step is set to be the same for all steps, for example, if the wavelength $\lambda$ of the incident light is 940 nm, the number of steps L is 8, and the refractive index difference $\Delta n$ is 0.5, the height D1 of one step is 235 nm.

The height of one step of the second diffraction grating portion may be similar to the height of one step of the first diffraction grating portion described above.

In the present disclosure, since the difference between the grating height of the first diffraction grating portion and the grating height of the second diffraction grating portion is small, and the number of steps of the second diffraction grating portion is more than the number of steps of the first diffraction grating portion, when the height of one step is set to be the same for all steps, the height of one step of the second diffraction grating portion is lower than the height of one step of the first diffraction grating portion.

In each diffraction grating portion, the height of one step may be, for example, the same for all steps, and may be different for each step.

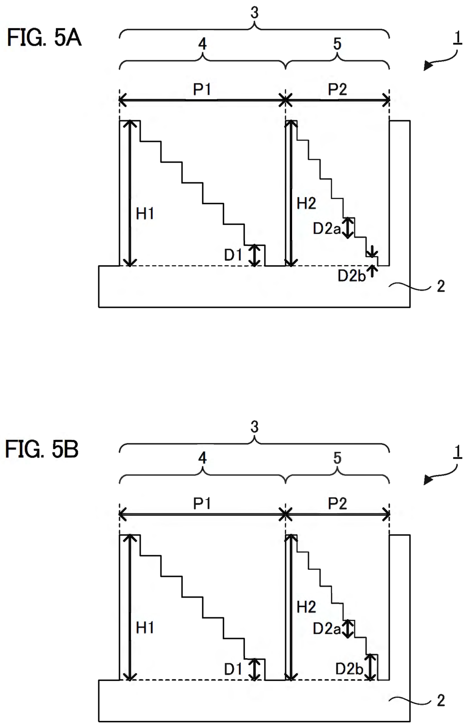

In the second diffraction grating portion, for example, when the number of steps of the second diffraction grating portion is N, and the steps are numbered as first step, second step, ... and Nth step from the top, and when the height of one step is the same for all steps except the Nth step, the height of the Nth step may or may not be the same as the height of the steps other than Nth step. When the height of the Nth step is different from the height of the steps other than the Nth step, the height of the Nth step may be higher or lower than the height of the steps other than the Nth step. For example, in FIGS. 5A and 5B, the number of steps of the second diffraction grating portion is nine, and the heights D2a of the first step to eighth step are the same. In FIG. 5A, the height D2b of the ninth step is lower than the heights D2a of the first step to the eighth step. In FIG. 5B, the height D2b of the ninth step is higher than the heights D2a of the first step to the eighth step.

The grating period of the second diffraction grating portion is shorter than the grating period of the first diffraction grating portion. The difference between the grating period of the first diffraction grating portion and the grating period of the second diffraction grating portion is not particularly limited as long as the grating period of the second diffraction grating portion is shorter than the grating period of the first diffraction grating portion, and is set appropriately according to the use application of the diffraction grating.

The grating period of the first diffraction grating portion is set appropriately according to the use application of the diffraction grating. For example, when the wavelength $\lambda$ of the incident light is 940 nm, the number of steps L is 8, and the refractive index difference $\Delta n$ is 0.5, and when the diffraction angle 0.25° or more and 70° or less, the grating period of the first diffraction grating portion may be in a range of 1.0 $\mu$m or more and 215.4 $\mu$m or less; when the diffraction angle 0.25° or more and 50° or less, the grating period of the first diffraction grating portion may be in a range of 1.2 $\mu$m or more and 215.4 $\mu$m or less; and when the diffraction angle 0.25° or more and 30° or less, the grating period of the first diffraction grating portion may be in a range of 1.9 $\mu$m or more and 215.4 $\mu$m or less. When the grating period of the first diffraction grating portion is too short, since the grating period of the second diffraction grating portion will be shorter than that, the production of the diffraction grating may be difficult in view of manufacturing limitations.

The grating period of the second diffraction grating portion has only to be shorter than the grating period of the first diffraction grating portion described above. When the grating period of the second diffraction grating portion is too short, the production of the diffraction grating may be difficult in view of manufacturing limitations.

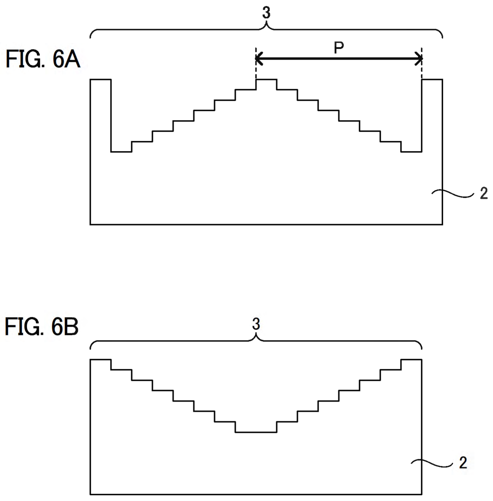

The grating period of each diffraction grating portion is the distance from the outer end point of the top portion surface to the outer end point of the bottom portion surface in the surface direction of the diffraction grating. For example, as shown in FIG. 1, the grating height P1 of the first diffraction grating portion 4 is the distance from the outer end point of the top portion surface to the outer end point of the bottom portion surface of the first diffraction grating portion 4; and the grating height P2 of the second diffraction grating portion 5 is the distance from the outer end point of the top portion surface to the outer end point of the bottom portion surface of the second diffraction grating portion 5. For example, as shown in FIG. 1 and FIG. 6A, in the grooves of the diffraction grating structure 3, for the groove wherein the depth of the groove increases per each step, the grating period is regarded as P1, P2, and P. For example, as shown in FIG. 6B, in the grooves of the diffraction grating structure 3, for the groove wherein the depth of the groove increases or decreases per each step, the period is not considered as a grating period.

The width of one step of the first diffraction grating portion and the second diffraction grating portion is respectively set appropriately according to the grating period, and number of steps of the first diffraction grating portion and the second diffraction grating portion. Incidentally, when the width of one step is too short, the production of the diffraction grating may be difficult in view of manufacturing limitations.

In the present disclosure, since the grating period of the second diffraction grating portion is shorter than the grating period of the first diffraction grating portion, and the number of steps of the second diffraction grating portion is more than the number of steps of the first diffraction grating portion, the width of one step of the second diffraction grating portion is usually less than the width of one step of the first diffraction grating portion.

In each diffraction grating portion, the width of one step may be, for example, the same for all steps, and may be different for each step.

The number of steps of the second diffraction grating portion is more than the number of steps of the first diffraction grating portion. The difference between the number of steps of the first diffraction grating portion and the number of steps of the second diffraction grating portion is not particularly limited as long as the number of steps of the second diffraction grating portion is more than the number of steps of the first diffraction grating portion, and may be, for example, 1 or more, and may be 1 or more and 4 or less. The difference between the number of steps of the first diffraction grating portion and the number of steps of the second diffraction grating portion is usually 1.

The number of steps of the first diffraction grating portion and the second diffraction grating portion is preferably, for example, 7 or more, more preferably 12 or more, and further preferably 16 or more. When the number of steps is 7 or more, the diffraction efficiency may be improved. When the number of steps is 12 or more, or 16 or more, the diffraction efficiency may further be improved. Meanwhile, there is a limit to the effect of improving diffraction efficiency by increasing the number of steps. The number of steps of the first diffraction grating portion and the second diffraction grating portion is preferably, for example, 16 or less, from the viewpoint of the number of processing steps.

The number of steps of each diffraction grating portion is the number of planes parallel to the surface of the optically transparent substrate in each diffraction grating portion. For example, in FIG. 1, the number of steps of the first diffraction grating portion 4 is eight, and the number of steps of the second diffraction grating portion 5 is nine.

The diffraction grating structure has only to include at least a first diffraction grating portion and a second diffraction grating portion with different grating periods and numbers of steps.

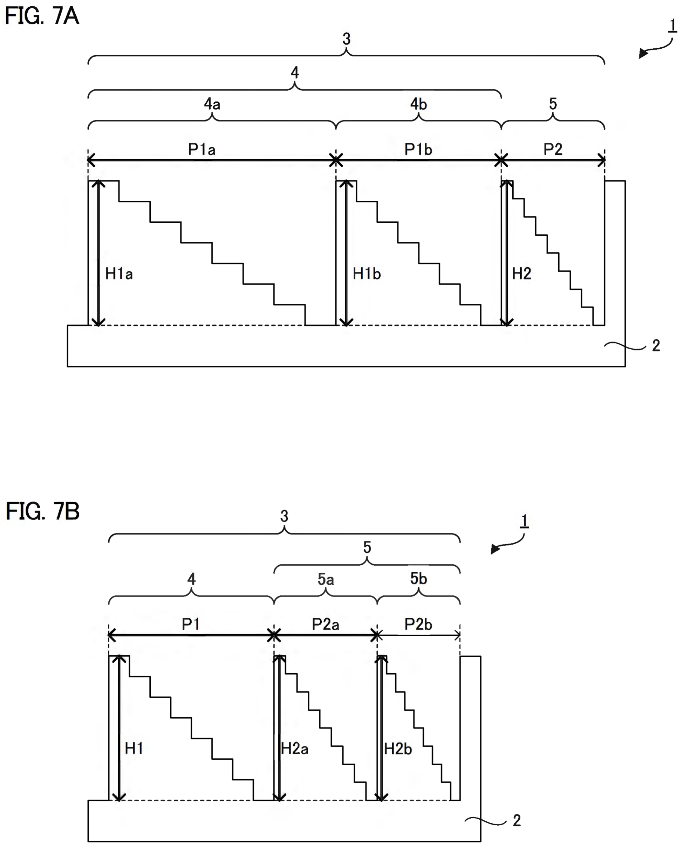

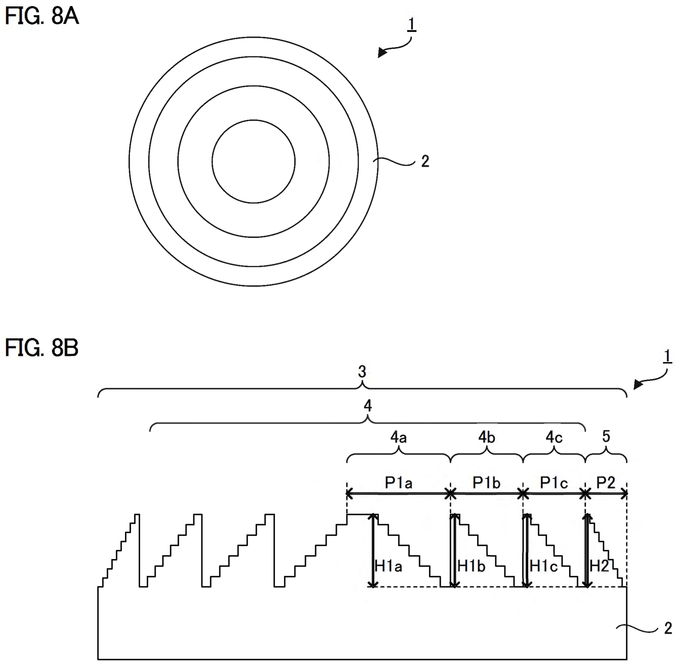

As the first diffraction grating portion, the diffraction grating structure may include plural types of the first diffraction grating portions with same number of steps and different grating periods. In this case, the grating period of the second diffraction grating portion is shorter than the grating period of all the first diffraction grating portions, and the number of steps of the second diffraction grating portion is more than the number of steps of all the first diffraction grating portions. For example, in FIG. 7A, as the first diffraction grating portion 4, the diffraction grating structure 3 includes plural types of the first diffraction grating portions 4a, 4b with the same number of steps of 8 steps and different grating periods P1a, P1b. For example, in FIG. 8B, as the first diffraction grating portion 4, the diffraction grating structure 3 includes plural types of the first diffraction grating portions 4a, 4b, 4c with the same number of steps of 8 steps and different grating periods P1a, P1b, P1c. In such cases, the design values for the grating heights H1a, H1b, or H1a, H1b, H1c for each first diffraction grating portion 4a, 4b or 4a, 4b, 4c are usually the same value.

FIG. 8B is a cross-sectional view of FIG. 8A, and is an example wherein the diffraction grating is a diffraction type Fresnel lens.

When the diffraction grating structure includes, as the first diffraction grating portion, plural types of the first diffraction grating portions with the same number of steps and different grating periods, the number of types of the first diffraction grating portion is not particularly limited as long as it is two or more, and is selected appropriately according to the use application of the diffraction grating.

As the second diffraction grating portion, the diffraction grating structure may include plural types of the second diffraction grating portions with the same or different numbers of steps and different grating periods. In this case, the grating periods of all the second diffraction grating portions are shorter than the grating periods of the first diffraction grating portions, and the numbers of steps of all the second diffraction grating portions are more than the numbers of steps of the first diffraction grating portions. For example, in FIG. 7B, as the second diffraction grating portion 5, the diffraction grating structure 3 includes plural types of the second diffraction grating portions 5a, 5b with the same number of steps of 9 steps and different grating periods P2a, P2b. In this case, the grating height H2a, H2b of each second diffraction grating portion 5a, 5b may or may not be the same, as long as the difference between the grating height H1 of the first diffraction grating portion 4 and the grating height H2a, H2b of each second diffraction grating portion 5a, 5b is respectively in a predetermined range.

When the diffraction grating structure includes, as the second diffraction grating portion, plural types of the second diffraction grating portions with the same or different numbers of steps and different grating periods, the number of types of the second diffraction grating portions is not particularly limited as long as it is two or more, and is usually 2 or more and 4 or less.

The diffraction grating structure has a step-like cross-sectional shape. The diffraction grating structure may be an approximation of a slope to the step-like shape. The diffraction grating structure may be, for example, an approximation of a smooth surface to the step-like shape, and may be an approximation of a curved surface to the step-like shape.

The diffraction grating structure is formed of a single member, that is, one member. Therefore, the diffraction grating structure is not formed of multiple members as a conventional structure including an etching stopper layer.

The diffraction grating in the present disclosure is not particularly limited as long as the diffraction grating structure is formed of a single member, and the optically transparent substrate and the diffraction grating structure may be integrated, and may be separate members. The optically transparent substrate and the diffraction grating structure being integrated means that the optically transparent substrate and the diffraction grating structure are constituted with one layer. When the optically transparent substrate and the diffraction grating structure are separate members, the diffraction grating may include an optically transparent substrate, and an optically transparent layer, placed on one surface of the optically transparent substrate, constituting a diffraction grating structure.

The optically transparent substrate is not particularly limited as long as it has transparency to the light of the objective wavelength. The material of the optically transparent substrate capable of transmitting visible light may be, for example, glass, quartz, and resin. Also, the material of the optically transparent substrate capable of transmitting infrared light may be, for example, silicon.

When the diffraction grating includes the optically transparent substrate and the optically transparent layer, the optically transparent layer is not particularly limited as long as it has transparency to the light of the objective wavelength. The material of the optically transparent layer capable of transmitting visible light may be, for example, silicon oxide, silicon nitride, silicon oxide/nitride, and resin.

Examples of the resin may include ultraviolet curable resins, thermosetting resins, electron beam curable resins, and spin-on glass of ultraviolet curable type or thermosetting type. Examples of the ultraviolet curable resin may include resins including, for example, urethane acrylate, polyester acrylate, epoxy acrylate, polyether acrylate, polythiol, or butadiene acrylate as a main component. By forming the optical transparent layer of the ultraviolet curable resin, the diffraction grating structure may be easily formed by imprinting method or other methods.

A cohesiveness layer may be formed between the optically transparent substrate and the optically transparent layer. The cohesiveness layer may be, for example, a silane coupling agent. By forming the cohesiveness layer, close adhesiveness between the optically transparent substrate and the optically transparent layer may be improved. By improving the close adhesiveness, the optically transparent substrate and the optically transparent layer may be suppressed from being peeled off in the imprinting method. Further, when used as a diffraction grating for a long time, improved close adhesiveness is often advantageous.

## 2. Diffraction grating

The diffraction grating in the present disclosure may be, for example, a transmission type diffraction grating.

The diffraction grating in the present disclosure is preferably, for example, a diffraction type Fresnel lens. As shown in FIGS. 8A and 8B for example, in the diffraction type Fresnel lens, the grating period of the diffraction grating portion is shortened from the center to the outer periphery. For this reason, the diffraction grating portion at the outer periphery portion of a conventional diffraction type Fresnel lens is formed by reducing the number of steps, from the viewpoint of manufacturing limitations. When a diffraction grating is formed by reducing the number of steps using a conventional method for producing a diffraction grating, the grating height is reduced as described above. For example, the grating height of the diffraction grating portion with short grating period, that is, the diffraction grating portion with a small width of one step, may be low, depending on, for example, the characteristics of the etching device and the etching conditions. In this way, the grating height tends to be uneven in the diffraction type Fresnel lens. In contrast to this, as described above, the uniformity of the grating height of the diffraction grating in the present disclosure may be improved so that the diffraction efficiency may be improved.

The diffraction type Fresnel lens is also called a harmonic Fresnel lens, for example.

## 3. Mold for forming diffraction grating

The diffraction grating structure in the present disclosure described above may also be used as a pattern structure for a mold for forming a diffraction grating in the imprinting method. When used as a pattern structure, each term is read as follows. The diffraction grating structure is read in a different way as pattern structure. The diffraction grating is read in a different way as mold for forming a diffraction grating. The grating period is read in a different way as pattern period. The first diffraction grating portion is read in a different way as first pattern portion. The second diffraction grating portion is read in a different way as second pattern portion. The grating height is read in a different way as pattern height.

The mold for forming a diffraction grating in the present disclosure comprises a pattern structure, with a step-like cross-sectional shape, on a surface of an optically transparent substrate, wherein the pattern structure is formed of a single member; the pattern structure includes a first pattern portion and a second pattern portion with different pattern periods and different numbers of steps; a pattern period of the second pattern portion is shorter than a pattern period of the first pattern portion; a number of steps of the second pattern portion is more than a number of steps of the first pattern portion; and a difference between a pattern height of the first pattern portion and a pattern height of the second pattern portion is less than a minimum height of one step of the first pattern portion.

The pattern structure includes a first pattern portion and a second pattern portion with different pattern periods and numbers of steps; the pattern period of the second pattern portion is shorter than the pattern period of the first pattern portion; the number of steps of the second pattern portion is more than the number of steps of the first pattern portion; and a difference between a pattern height of the first pattern portion and a pattern height of the second pattern portion is less than a minimum height of one step of the first pattern portion.

The difference between the pattern height of the first pattern portion and the pattern height of the second pattern portion is less than a minimum height of one step of the first pattern portion. Thereby, in the diffraction grating formed by the imprinting method, the uniformity of the grating height of the diffraction grating structure may be improved so that the diffraction efficiency may be improved.

Also, the difference between the pattern height of the first pattern portion and the pattern height of the second pattern portion is preferably, for example, 15% or less, more preferably 9% or less, and further preferably 6% or less, with respect to 100% of the pattern height of the first pattern portion. When the difference described above is 15% or less, in the diffraction grating formed by the imprinting method, the uniformity of the grating height of the diffraction grating structure may be improved so that the diffraction efficiency may be improved. When the difference described above is 9% or less, or 6% or less, the diffraction efficiency in the diffraction grating formed by the imprinting method may further be improved.

The number of steps of the first pattern portion and the second pattern portion is preferably, for example, 7 or more, more preferably 12 or more, and further preferably 16 or more, respectively. When the number of steps is 7 or more, the diffraction efficiency in the diffraction grating formed by the imprinting method may be improved. When the number of steps is 12 or more, or 16 or more, the diffraction efficiency in the diffraction grating formed by the imprinting method may further be improved. Meanwhile, there is a limit to the effect of improving diffraction efficiency by increasing the number of steps. The number of steps of the first pattern portion and the second pattern portion is preferably, for example, 16 or less respectively, from the viewpoint of the number of processing steps.

The optically transparent substrate and the pattern structure may be integrated, and may be separate members. Examples of the embodiment wherein the optically transparent substrate and the pattern structure are integrated, may include a master mold. Examples pf the embodiment wherein the optically transparent substrate and the pattern structure are separate members, may include a replica mold.

The other configurations of the mold for forming a diffraction grating in the present disclosure are similar to those described above for the diffraction grating structure.

4. Method for producing diffraction grating and mold for forming diffraction grating

The method for producing a diffraction grating in the present disclosure is not particularly limited as long as it is capable of producing a diffraction grating including the diffraction grating structure described above on the surface of an optically transparent substrate, and a method wherein each step is formed by repeating lithography and etching, is preferable.

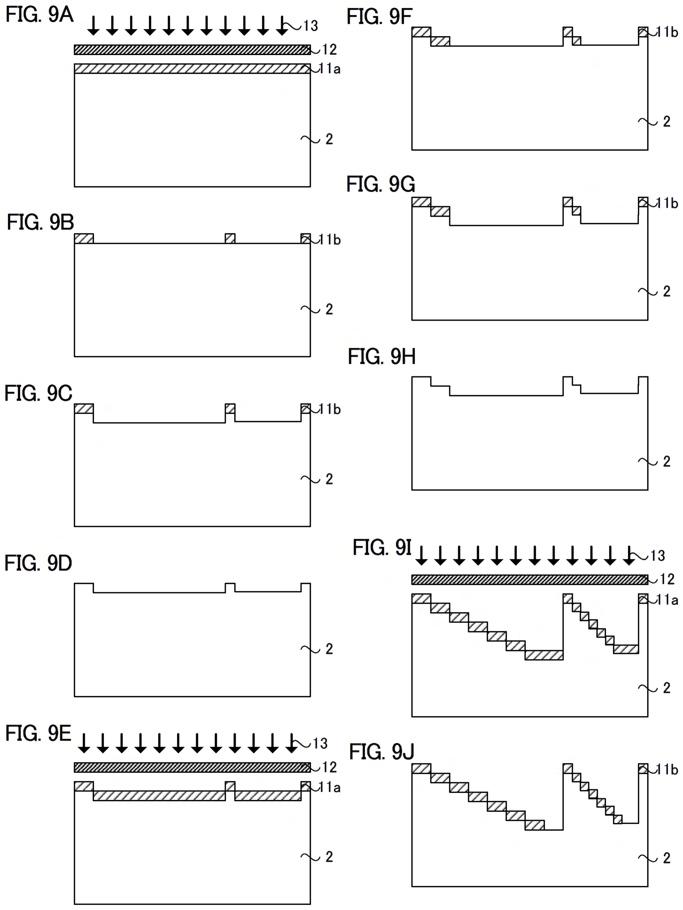

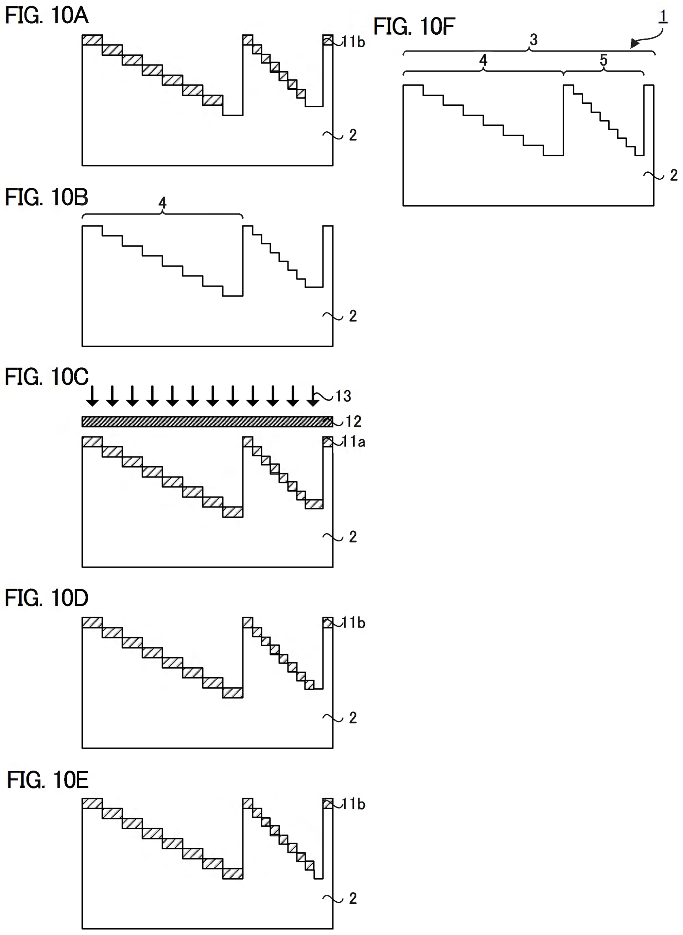

FIGS. 9A to 9J and FIGS. 10A and 10F are process drawings illustrating an example of a method for producing a diffraction grating in the present disclosure. As shown in FIG. 9A, a resist layer 11a is formed on an optically transparent substrate 2, and a pattern exposure is carried out by irradiating energy rays 13 such as ultraviolet rays via a mask 12. As shown in FIG. 9B, a resist pattern 11b is formed. As shown in FIG. 9C, the optically transparent substrate 2 is etched. As shown in FIG. 2D, the resist pattern 11b is removed. Thereby, the first step is formed. As shown in FIGS. 9E to 9H, the formation of the resist layer 11a, the pattern exposure, the etching of the optically transparent substrate 2, and the removal of the resist pattern 11b are further carried out. Thereby, the second step is formed. Although not shown in the figures, the formation of the resist layer 11a, the pattern exposure, the etching of the optically transparent substrate 2, and the removal of the resist pattern 11b are carried out repeatedly. Thereby, the third to seventh steps are formed. As shown in FIGS. 9I to 9J and FIGS. 10A to 10B, the formation of the resist layer 11a, the pattern exposure, the etching of the optically transparent substrate 2, and the removal of the resist pattern 11b are further carried out. Thereby, the eighth step is formed, and the first diffraction grating portion 4 is formed. As shown in FIGS. 10C to 10F, the formation of the resist layer 11a, the pattern exposure, the etching of the optically transparent substrate 2, and the removal of the resist pattern 11b are further carried out. Thereby, the ninth step is formed, and the second diffraction grating portion 5 is formed. As described above, by repeating lithography and etching for (N + 1) times, for example, a diffraction grating structure including the first diffraction grating portion with N steps, and the second diffraction grating portion with (N + 1) steps may be formed.

When forming the last step of the second diffraction grating portion, the difference between the grating height of the first diffraction grating portion and the grating height of the second diffraction grating portion may be made less than the minimum height of one step of the first diffraction grating portion, by etching the optically transparent substrate so that the difference of the grating height of the obtained second diffraction grating portion with respect to the grating height of the first diffraction grating portion is less than the minimum height of one step of the first diffraction grating portion.

When designing a diffraction grating, for example, by forming a diffraction grating structure on the surface of an optically transparent substrate in advance, a diffraction grating portion wherein the difference with respect to the grating height of the first diffraction grating portion is the minimum height, of one step of the first diffraction grating portion, or more (Hereinafter, it may be referred to as a specific diffraction grating portion, in some cases.) may be specified, and the specific diffraction grating portion may be designed. For example, for the specific diffraction grating portion, the difference with respect to the grating height of the first diffraction grating portion may be made smaller than the minimum height of one step of the first diffraction grating portion, by decreasing the width of one step and increasing the number of steps.

5. Method for duplicating diffraction grating

The diffraction grating in the present disclosure may be duplicated by an imprinting method using a mold for forming a diffraction grating. The method for duplicating a diffraction grating by an imprinting method will be described. An optically transparent substrate, for example, is coated with an ultraviolet curable resin. A mold for forming a diffraction grating is pressed onto the not cured ultraviolet curable resin, and the ultraviolet curable resin is filled into the pattern structure. Ultraviolet rays are irradiated via a mold for forming a diffraction grating to cure the ultraviolet curable resin. The mold for forming a diffraction grating is removed from the ultraviolet curable resin and the diffraction grating is completed. The completed diffraction grating includes a diffraction grating structure duplicated by the mold for forming a diffraction grating.

The diffraction grating in the present disclosure may include a diffraction grating structure duplicated by the mold for forming a diffraction grating. The diffraction grating structure duplicated by the mold for forming a diffraction grating is a structure wherein the pattern structure is inverted. Inversion means that the concave of the diffraction grating structure corresponds to the convex of the pattern structure, and the convex of the diffraction grating structure corresponds to the concave of the pattern structure.

As described above, when duplicated for one time, the diffraction grating structure is a structure wherein the pattern structure is inverted. When a diffraction grating structure and a pattern structure having identical structure are to be produced, a total of two duplications may be carried out via a production of a replica mold. In other words, the diffraction grating may be duplicated by further imprinting method using a replica mold duplicated by the imprinting method.

The mold for forming a diffraction grating in the present disclosure may include a pattern structure configured to duplicate the diffraction grating. The pattern structure configured to duplicate the diffraction grating is a structure wherein the diffraction grating structure is inverted. In other words, when producing a mold for forming a diffraction grating, a structure wherein the diffraction grating structure is inverted, may be designed as the pattern structure. When the pattern structure is a structure wherein the diffraction grating structure is inverted, a desired diffraction grating may be prepared by a duplication for one time.

The present disclosure is not limited to the embodiments. The embodiments are exemplification. Any other variations are intended to be included in the technical scope of the present disclosure if they have substantially the same constitution as the technical idea described in the claim of the present disclosure and offer similar operation and effect thereto.

Examples

Reference Example 1 will be described.

For the analysis simulation of the diffraction efficiency of the diffraction grating, a strictly coupled wave theory described in "Numerical analysis of diffraction optical element and application thereof" (Editorial supervised by Kashiko Kodate, Maruzen Publishing, 2011) was used. Strictly coupled wave theory is also referred to as RCWA or Rigorous Coupled Wave Analysis.

The grating period of the diffraction grating was 50 $\mu$m, the wavelength of the incident light was 940 nm, and the refractive index difference was 0.5. Assuming that the height of one step was the same for all steps, the grating height was determined setting the number of steps as 16. Specifically, the grating height $H_{16L}$ was set from the formulas (1-1) and (2-1).

$$H_{16L} = D \times (L - 1) \qquad (1\text{-}1)$$

$$D = (2 \times \lambda)/(L \times 2 \times \Delta n) \qquad (2-1)$$

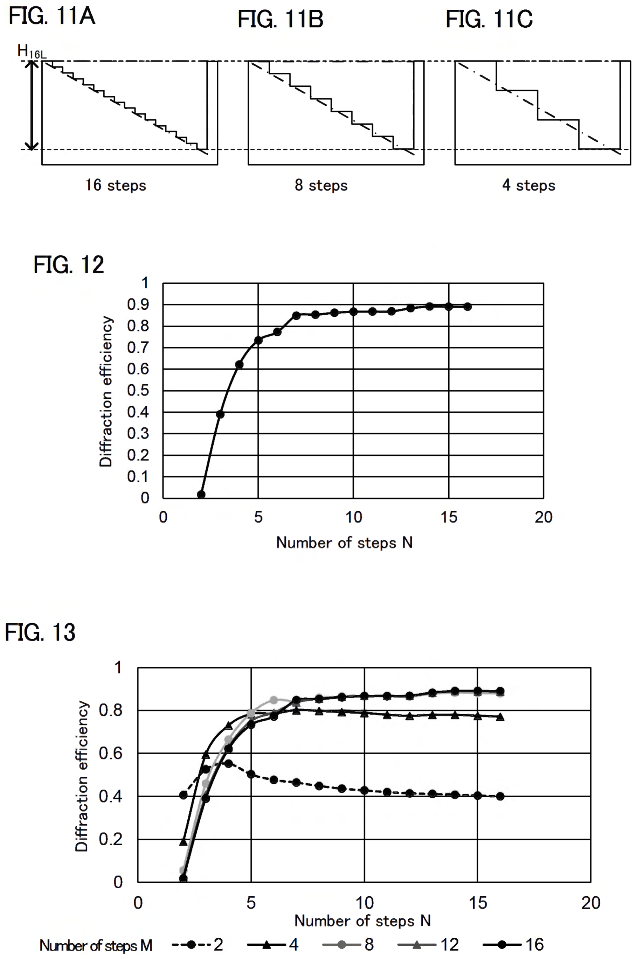

D is the height of one step. L is the number of steps. $\lambda$ is the wavelength of the incident light. $\Delta n$ is the difference between the refractive index n1 of the diffraction grating portion and the refractive index n2 of the medium in contact with the diffraction grating portion, and that is a value obtained by subtracting the refractive index n2 of the medium in contact with the diffraction grating portion from the refractive index n1 of the diffraction grating portion. Since the wavelength $\lambda$ of the incident light was 940 nm, the number of steps L was 16, and the refractive index difference $\Delta n$ was 0.5, the grating height $H_{16L}$ was 1762.5 nm. For example, as shown in FIGS. 11A to 11C, a model of a diffraction grating portion including N steps, when the grating height $H_{16L}$ was the value described above, was used. The number of steps N was 2 or more and 16 or less. For example, the models in FIGS. 11A to 11C were respectively models of 16 steps, 8 steps, and 4 steps, and the grating height $H_{16L}$ of all models were set to the values described above. This simulation analyzed, when the grating height was determined setting the number of steps as 16, how the diffraction efficiency varied when the number of steps N was varied. The results of the simulation are shown in FIG. 12. As shown in FIG.12, the diffraction efficiency was 85% or more, when the number of steps N of the diffraction grating portion was 7 or more. It was confirmed that by increasing the number of steps, the uniformity of the grating height was increased and the diffraction efficiency was increased.

Reference Example 2 will be described.

For the analysis simulation of the diffraction efficiency of the diffraction grating, a RCWA described in "Numerical analysis of diffraction optical element and application thereof" (Editorial supervised by Kashiko Kodate, Maruzen Publishing, 2011) was used.

The grating period of the diffraction grating portion was 50 $\mu$m, the wavelength of the incident light was 940 nm, and the refractive index difference was 0.5. Assuming that the height of one step was the same for all steps, the grating height was determined setting the numbers of steps respectively as 2, 4, 8, 12, and 16. Specifically, the grating height H was set from the formulas (1-2) and (2-2).

$$H = D \times (L - 1) \qquad (1-2)$$

$$D = (2 \times \lambda)/(L \times 2 \times \Delta n) \qquad (2-2)$$

The symbols in the above formulas (1-2) and (2-2) are the same as the symbols in the above formulas (1-1) and (2-1). For example, when the number of steps L was 16, since the wavelength $\lambda$ of the incident light was 940 nm, and the refractive index difference $\Delta n$ was 0.5, the grating height H was 1762.5 nm. For example, when the number of steps L was 8, since the wavelength $\lambda$ of the incident light was 940 nm, and the refractive index difference $\Delta n$ was 0.5, the grating height H was 1645 nm. For the cases where the grating height H was determined setting the number of steps as M steps (M = 2, 4, 8, 12, 16), respective models of the diffraction grating portion including N steps were used. The number of steps N was 2 or more and 16 or less. For example, the models in FIGS. 11A to 11C are respectively models of 16 steps, 8 steps, and 4 steps (number of steps N = 16, 8, 4), when the grating height was determined setting the number of steps as 16 steps (number of steps M = 16), and the grating height $H_{16L}$ of all models were set to a same predetermined value. This simulation analyzed, when the grating height was determined setting the number of steps as M steps (M = 2, 4, 8, 12, 16), how the diffraction efficiency varied when the number of steps M was varied. The results of the simulation are shown in FIG. 13. As shown in FIG.13, it was shown that the diffraction efficiency was high when the number of steps M was 8 or more, that is, when the grating height was determined designing the number of steps as 8 or more.

Incidentally, the present disclosure provides, for example, the following inventions.

[1]
A diffraction grating comprising:

an optically transparent substrate; and
a diffraction grating structure, with a step-like cross-sectional shape, on a surface of the optically transparent substrate, wherein
the diffraction grating structure is formed of a single member,
the diffraction grating structure includes a first diffraction grating portion and a second diffraction grating portion with different grating periods and different numbers of steps,
a grating period of the second diffraction grating portion is shorter than a grating period of the first diffraction grating portion,
a number of steps of the second diffraction grating portion is more than a number of steps of the first diffraction grating portion, and

a difference between a grating height of the first diffraction grating portion and a grating height of the second diffraction grating portion is less than a minimum height of one step of the first diffraction grating portion.

[2] The diffraction grating according to [1], wherein the difference between the grating height of the first diffraction grating portion and the grating height of the second diffraction grating portion is 15% or less with respect to 100% of the grating height of the first diffraction grating portion.

[3] The diffraction grating according to [1] or [2], wherein the number of steps of the first diffraction grating portion is 7 or more.

[4] A mold for forming a diffraction grating comprising a pattern structure configured to duplicate the diffraction grating according to any one of [1] to [3].

[5]

A mold for forming a diffraction grating comprising:

an optically transparent substrate; and

a pattern structure, with a step-like cross-sectional shape, on a surface of the optically transparent substrate, wherein

the pattern structure is formed of a single member,

the pattern structure includes a first pattern portion and a second pattern portion with different pattern periods and different numbers of steps,

a pattern period of the second pattern portion is shorter than a pattern period of the first pattern portion,

a number of steps of the second pattern portion is more than a number of steps of the first pattern portion, and

a difference between a pattern height of the first pattern portion and a pattern height of the second pattern portion is less than a minimum height of one step of the first pattern portion.

[6] The mold for forming a diffraction grating according to [5], wherein the difference between the pattern height of the first pattern portion and the pattern height of the second pattern portion is 15% or less with respect to 100% of the pattern height of the first pattern portion.

[7] The mold for forming a diffraction grating according to [5] or [6], wherein the number of steps of the first pattern portion is 7 or more.

[8] A diffraction grating comprising a diffraction grating structure duplicated by the mold for forming a diffraction grating according to any one of [5] to [7].

Reference Signs List

1: diffraction grating
2: optically transparent substrate
3: diffraction grating structure
4: first diffraction grating portion
5: second diffraction grating portion
D1: minimum height of one step of first diffraction grating portion
H1: grating height of first diffraction grating portion
H2: grating height of second diffraction grating portion
P1: grating period of first diffraction grating portion
P2: grating period of second diffraction grating portion

**Claims**

1. A mold for forming a diffraction grating comprising:

   an optically transparent substrate; and
   a pattern structure, with a step-like cross-sectional shape, on a surface of the optically transparent substrate, wherein
   the pattern structure is formed of a single member,
   the pattern structure includes a first pattern portion and a second pattern portion with different pattern periods and different numbers of steps,
a pattern period of the second pattern portion is shorter than a pattern period of the first pattern portion,
a number of steps of the second pattern portion is more than a number of steps of the first pattern portion, and
a difference between a pattern height of the first pattern portion and a pattern height of the second pattern portion
is less than a minimum height of one step of the first pattern portion;
wherein the difference between the pattern height of the first pattern portion and the pattern height of the second
pattern portion is 15% or less with respect to 100% of the pattern height of the first pattern portion, and/or
wherein the number of steps of the first pattern portion is 7 or more.

2. A diffraction grating comprising a diffraction grating structure duplicated by the mold for forming a diffraction grating according to claim 1.

FIG. 1

FIG. 2A

105
104
103a
102

FIG. 2F

103b
102

FIG. 2B

103b
102

FIG. 2G

103b
102

FIG. 2C

103b
102

FIG. 2H

102

FIG. 2D

102

FIG. 2I

105
104
103a
102

FIG. 2E

105
104
103a
102

FIG. 2J

103b
102

FIG. 3A

103b

102

FIG. 3B

102

FIG. 4A

FIG. 4B

FIG. 5A

FIG. 5B

FIG. 6A

FIG. 6B

FIG. 7A

FIG. 7B

FIG. 8A

FIG. 8B

FIG. 10A

FIG. 10F

FIG. 10B

FIG. 10C

FIG. 10D

FIG. 10E

FIG. 11A

FIG. 11B

FIG. 11C

$H_{16L}$

16 steps

8 steps

4 steps

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0815510 A

- JP 2000181076 A

**Non-patent literature cited in the description**

- **ZHIYU ZHANG et al.** Hybrid-level Fresnel zone plate for diffraction efficiency enhancement. *Optics Express*, 2017, vol. 25 (26), 33676-33687

- **KASHIKO KODATE**. Numerical analysis of diffraction optical element and application thereof. Maruzen Publishing, 2011